# EUROPÄISCHE PATENTANMELDUNG

(11) **EP 1 462 714 A2**
(43) Veröffentlichungstag der Anmeldung: **29.09.2004**
(21) Anmeldenummer: 04005999.0
(22) Anmeldetag: 12.03.2004
(51) Int. Cl.: F21V 19/00

(54) **Koppelelement für längliche Lampen und Beleuchtungssystem mit diesem Koppelelement**

(30) Priorität: 27.03.2003 DE 10313956
(71) Anmelder: Patent -Treuhand-Gesellschaft für elektrische Glühlampen mbH, 81543 München (DE)
(72) Erfinder: Döll, Gerhard, Dr., 89075 Ulm (DE); Rink, Jörg, Dr., 89428 Syrgenstein (DE)

(57) **Zusammenfassung**

Zum Kombinieren von zumindest zwei länglichen Lampen mit jeweils zwei Enden wird ein Koppelelement (2) vorgeschlagen. Dazu weist das Koppelelement (2) eine zur Aufnahme eines Endes jeder Lampe vorgesehene durchgängige Aufnahmefläche auf. Die Aufnahmefläche umfasst einen Reflektor (6), um den Leuchtdichteabfall im Bereich zwischen den Lampenenden zu verringern. Mit einem oder mehreren erfindungsgemäßen Koppelelementen in Verbindung mit zwei bzw. mehr länglichen Lampen können in modularer Weise Beleuchtungssysteme unterschiedlicher leuchtender Längen realisieren werden.

## Beschreibung

### Technisches Gebiet

Die Erfindung betrifft ein Koppelelement für längliche Lampen, insbesondere Aperturlampen. Außerdem betrifft die Erfindung ein Beleuchtungssystem mit mindestens zwei länglichen Lampen und mindestens einem solchen Koppelelement.

Aperturlampen sind entlang ihrer Längsachse auf der Innen- oder Außenseite des Lampengefäßes mit einem Reflektor für sichtbares Licht versehen, der entlang der Längsachse über einen definierten Bereich (=Apertur) ausgespart ist. Im einfachsten Fall ist der Reflektor durch eine geeignet dicke Leuchtstoffschicht realisiert. Alternativ kann unterhalb der Leuchtstoffschicht auch eine zusätzliche Reflexionsschicht angeordnet sein. Dabei kann sich die hier dünnere Leuchtstoffschicht auch über die gesamte Apertur erstrecken. Jedenfalls gelangt das innerhalb der Lampe erzeugte Licht im Wesentlichen nur durch die Apertur hindurch nach außen. Dadurch wird innerhalb der Apertur eine höhere Leuchtdichte erzielt als ohne Reflektor. Außerdem wird das Licht im wesentlichen gerichtet, d.h. innerhalb eines Winkelbereichs abgestrahlt, was für eine möglichst hohe Beleuchtungsstärke vorteilhaft ist.

Derartige Lampen werden beispielsweise in Belichtungseinheiten für Kopierer, Scanner, Faxgeräten und ähnlichen Geräten der Büroautomation, sogenannten OA-Geräten (OA = Office Automation), eingesetzt. Denkbar sind aber auch andere Einsatzbereiche, in denen ein bevorzugter Abstrahlwinkelbereich wünschenswert ist, bspw. in der Automobiltechnik, z.B. als Blink- oder Stopplicht und für die Innenbeleuchtung.

In vielen Anwendungen werden unterschiedlich lange Lampen benötigt, z.B. für unterschiedlich große Scannerflächen. Beispielsweise gibt es Geräte, die für Dokumente bis zur Größe A3 geeignet sind, aber auch andere, die bis A2 oder gar bis A0 geeignet sind. Hierfür sind jeweils verschiedene entsprechend lange Lampen erforderlich.

### Stand der Technik

Aus der US 6 097 155 ist eine rohrförmige Apertur-Leuchtstofflampe bekannt, die an einem Ende einen Sockel mit zwei Anschlussstiften aufweist. Die Lampe weist außerdem parallel zur Rohrlängsachse zwei diametral angeordnete streifenförmige Elektroden auf, eine davon auf der Außen- und die andere auf der Innenseite der Entladungsgefäßwand. Die beiden Elektroden sind im Innern des Sockels mit den beiden Anschlussstiften verbunden. Die Anschlussstifte sind ihrerseits über elektrische Leitungen mit den beiden Polen einer Impulsspannungsquelle verbunden. Die Lampe zeichnet sich durch eine relativ hohe Nutzstrahlungseffizienz aus.

### Darstellung der Erfindung

Die Aufgabe der vorliegenden Erfindung ist es, ein Beleuchtungssystem bereit zu stellen, dessen leuchtende Länge sich relativ einfach an unterschiedliche Anforderungen anpassen lässt.

Diese Aufgabe wird gelöst mit einem Koppelelement für das Kombinieren von zumindest zwei länglichen Lampen mit jeweils zwei Enden, wobei das Koppelelement eine zur Aufnahme eines Endes jeder Lampe vorgesehene durchgängige Aufnahmefläche aufweist, welche Aufnahmefläche einen Reflektor umfasst.

Der Vorteil der Erfindung besteht darin, mit zwei oder mehr Lampen einer bestimmten Länge in Verbindung mit einem oder mehreren erfindungsgemäßen Koppelelementen in modularer Weise Beleuchtungssysteme unterschiedlicher leuchtender Längen realisieren zu können.

Der Grundgedanke der Erfindung besteht zunächst darin, an Stelle einer einzigen länglichen Lampe der Länge *n· L* (*n* = 2, 3, 4, *...*) *n* längliche Lampen, die jeweils die Länge *L* haben, an ihren Enden mit jeweils einem speziellen Koppelelement zu einem Beleuchtungssystem zu verbinden. Um auf diese Weise *n* Lampen zu verbinden sind also *n* -1 Koppelelemente erforderlich. Die Erfindung ist dahingehend verallgemeinert zu verstehen, dass die einzelnen Lampen nicht notwendigerweise entlang einer Geraden verbunden sein müssen. Vielmehr sollen auch winkelige Gebilde eingeschlossen sein. Um den Leuchtdichteabfall im Bereich zwischen den Lampenenden zu verringern, umfasst die Aufnahmefläche jedes Koppelelements einen Reflektor.

Das Licht, das durch das eine Lampenende austritt, trifft zunächst auf das gegenüberliegende Lampenende und wird dort entweder in diese Lampe eingekoppelt, oder von deren Oberfläche reflektiert. Das in die gegenüberliegende Lampe eingekoppelte Licht trägt vorteilhafterweise zur Minimierung des ansonsten unvermeidbaren Lichtabfalls am Ende dieser Lampe bei. Das an der zweiten Lampe reflektierte Licht gelangt entweder als nutzbares Licht direkt nach außen, oder es wird auf die erste Lampe zurückgeworfen oder es trifft auf die Aufnahmefläche des Koppelelements, insbesondere auf den Reflektor. Im Kern wird dadurch axial austretendes Licht in eine seitliche Richtung umgelenkt und ist so für die eingangs erwähnten Beleuchtungszwecke länglicher Lampen nutzbar.

Obwohl die Erfindung ihre vorteilhafte Wirkung mit allen länglichen Lampen entfaltet, die einen signifikanten Anteil ihres Lichtstroms durch die Stirnseite eines oder beider Lampenenden abstrahlen, haben sich längliche Lampen auf der Basis dielektrisch behinderter Entladungen mit streifenförmigen Elektroden als besonders vorteilhaft erwiesen. Die streifenförmigen Elektroden sind entweder auf der Außen- oder Innenseite der Wand des länglichen Entladungsgefäßes angeordnet. Diese Form der Elektroden ermöglicht es im Gegensatz zu konventionellen an den jeweiligen Stirnseiten des zylinderförmigen Entladungsgefäßes angebrachten Elektroden auch, die Länge der nichtleuchtenden Enden minimal zu halten. Gleichzeitig wird aus den Stirnflächen der Enden ein beträchtlicher Lichtstrom in axialer Richtung ausgekoppelt, da durch die Leuchtstoffbeschichtung bei Leuchtstofflampen bzw. durch die Reflektorbeschichtung bei Aperturlampen das rohrförmige Entladungsgefäß wie ein Lichtleiter wirkt, der das Licht entlang der Rohrachse führt.

Der Reflektor des Koppelelements ist entweder durch eine diffus reflektierende oder durch eine spiegelnde Fläche, z.B. durch eine auf der Aufnahmefläche angeordnete reflektierende Folie, realisiert. Dabei muss der Reflektor aber nicht notwendigerweise durch ein separates Mittel realisiert sein, sondern kann auch durch das Koppelelement selbst gebildet sein, beispielsweise in dem das Koppelelement aus einem geeignet reflektierenden Material besteht oder eine geeignete Farbe hat, beispielsweise weiß, bzw. in dem die Aufnahmefläche des Koppelelements entsprechend bearbeitet, z.B. poliert ist. Entscheidend ist, das keine absorbierenden Flächen im Bereich zwischen den Stirnseiten der Lampenenden vorhanden sind, da dies wegen der Vielfachreflexion zu erheblichen Lichtverlusten führen würde. In diesem Sinne ist die Aufnahmefläche deshalb durchgängig ausgebildet. Gleichwohl muss die Aufnahmefläche bzw. das Koppelelement nicht notwendigerweise einteilig sein, sondern kann auch aus zwei oder mehr Teilen zusammengesetzt sein. Hinsichtlich der Wirkung des erfindungsgemäßen Koppelelements wird ergänzend auf die Ausführungsbeispiele verwiesen.

Außerdem sind die Enden zweier Lampen bevorzugt so innerhalb des Koppelelements angeordnet, dass die Stirnseiten beider Lampen möglichst nahe zueinander angeordnet sind ohne sich zu berühren, typisch mit ca. 1 mm Abstand. Dadurch wird einerseits verhindert, dass Spannungen entstehen, wenn sich die Lampen im Betrieb thermisch ausdehnen. Andererseits wird die räumliche Ausdehnung des durch den Spalt zwischen den beiden Stirnseiten verursachten Leuchtdichteabfall möglichst gering gehalten. Um das Anordnen der Lampenenden mit minimalem gegenseitigen Abstand der Stirnseiten zu vereinfachen, ist es vorteilhaft, das Koppelelement mit einem geeigneten Anschlag zu versehen. Dieser Anschlag kann z.B. in Form einer nasenartigen Erhebung in der Aufnahmefläche realisiert sein, wobei die Breite der Erhebung in Längsrichtung den minimalen gegenseitigen Abstand der Stirnseiten festlegt. Insofern soll ein derartiger Anschlag in der Aufnahmefläche, der keine völlige Trennung zwischen den beiden Lampenenden bewirkt, von dem Begriff "durchgängige Aufnahmefläche" umfasst sein.

In einer bevorzugten Ausführung ist das Koppelelement zur Aufnahme von Lampen mit rohrförmigem Lampengefäß vorgesehen, wobei die Aufnahmefläche an die rohrförmige Krümmung der Außenseite des aufzunehmenden Lampengefäßes angepasst ist. Zu diesem Zweck kann die Aufnahmefläche beispielsweise durch die Innenfläche einer Halbschale realisiert sein. Da eine Halbschale zwangsweise eine Lichtaustrittsöffnung frei lässt, kann die Halbschale selbst aus einem lichtundurchlässigen Material bestehen. Dies gilt nicht, wenn das Koppelelement alternativ als Hohlzylinder geformt ist. Um überhaupt eine Lichtabstrahlung zu ermöglichen, muss der Hohlzylinder nämlich aus einem lichtdurchlässigen Material, beispielsweise Plexiglas gefertigt sein. Ein Teil der Innenfläche ist als Reflektorfläche weitergebildet, wobei die Lichtaustrittsfläche frei bleibt. Alternativ kann das Koppelelement auch aus einem Quader gefertigt sein, wobei die Aufnahmefläche durch eine geeignete Bohrung in diesem Quader realisiert ist. Sofern die Bohrung nicht vollständig innerhalb des Quaders eingeschlossen ist, sondern einen Durchbruch bildet, der einen Lichtaustritt ermöglicht, kann der Quader ebenfalls aus einem lichtundurchlässigen Material bestehen. Jedenfalls ist auch hier ein Teil der Innenfläche als Reflektorfläche weitergebildet. Die Quaderform hat den Vorteil, dass das so geformte Koppelelement gleichzeitig als Lampensockel dient und beispielsweise auf einem Lampenträger montiert werden kann, gegebenenfalls mit zusätzlichen Mitteln zur Montage.

Falls mehr als zwei Lampen, beispielsweise drei Lampen, über die erfindungsgemäßen Koppelelemente zu einem Beleuchtungssystem miteinander verbunden sind, ist es notwendig, dass zumindest eines der beiden Koppelelemente mit elektrischen Kontakten versehen ist, um auch die "mittlere" Lampe mit einer elektrischen Leistungsversorgung verbinden zu können. Zumindest eine der beiden "äußeren" Lampen wird üblicherweise über den Sockelanschluss ihres freien Endes mit einer elektrischen Leistungsversorgung verbunden. Besonders einfach stellt sich die Situation für die "mittlere" Lampe dar, wenn jede Lampen mit streifenförmigen Elektroden versehen ist, die auf der Außenseite des Lampengefäßes angeordnet sind. Dann genügt es, wenn ein Koppelelement mit Kontaktflächen, z.B. mit entlang der Längsachse der Aufnahmefläche angeordneten länglichen Federkontakten, versehen ist, die die Elektroden einer "äußeren" Lampe mit den korrespondierenden Elektroden der "mittlere" Lampe verbinden. Damit ist es prinzipiell auch möglich, sämtliche Lampen mit einer einzigen elektrischen Leistungsversorgung zu versorgen, nämlich wenn alle Koppelelemente mit den vorgenannten Kontakten versehen sind. Allerdings wird es in der Regel zweckmäßiger sein, zumindest die beiden äußeren Enden jeweils mit einer elektrischen Leistungsversorgung zu versorgen, um den modularen Charakter dieses Konzepts auch auf Seiten der elektrischen Leistungsversorgung umzusetzen. In diesem Sinne kann es auch sinnvoll sein, ein Koppelelement mit zusätzlichen Anschlüssen für eine elektrische Leistungsversorgung zu versehen.

In einer weiteren Variante ist das Koppelelement zweiteilig. Die beiden Teile können z.B. durch einen Klippverschluss fest miteinander verbunden werden. Auf diese Weise kann jede Lampe als Einzelteil gefertigt und dann vor Ort bei der Montage ohne zusätzliche Teile direkt kombiniert werden.

### Kurze Beschreibung der Zeichnungen

Im Folgenden soll die Erfindung anhand von Ausführungsbeispielen näher erläutert werden. Die Figuren zeigen:

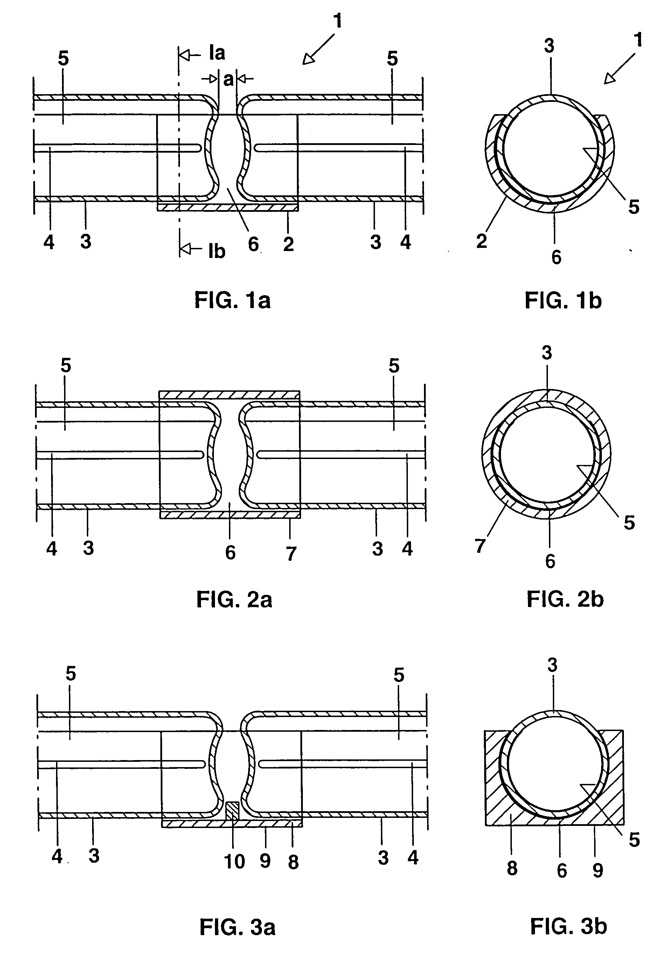

- Fig. 1a: einen Teillängsschnitt eines erfindungsgemäßen Beleuchtungssystems mit zwei mittels halbschalenförmigem Koppelelement verbundenen Aperturlampen,
- Fig. 1 b: einen Querschnitt des Beleuchtungssystems aus Fig. 1 a längs der Linie Ia-Ib,
- Fig. 2a: einen Teillängsschnitt einer weiteren Variante, bei der zwei Aperturlampen mittels hohlzylinderförmigem Koppelelement verbundenen sind,
- Fig. 2b: einen Querschnitt des Beleuchtungssystems aus Fig. 2a,
- Fig. 3a: einen Teillängsschnitt einer Variante, bei der zwei Aperturlampen mittels quaderförmigen Koppelelement verbundenen sind,
- Fig. 3b: einen Querschnitt des Beleuchtungssystems aus Fig. 3a,
- Fig. 4a: einen Teillängsschnitt einer weiteren Variante mit einem zweiteiligen Koppelelement im verbundenen Zustand,
- Fig. 4b: einen Querschnitt des Beleuchtungssystems aus Fig. 4a,
- Fig. 4c: einen Teillängsschnitt der zweiteiligen Variante aus Fig. 4a, aber im getrennten Zustand,
- Fig. 5: einen Teillängsschnitt einer weiteren Variante, wobei das Koppelelement elektrische Kontakte aufweist,
- Fig. 6: eine graphische Darstellung von längs des Beleuchtungssystems von Fig. 1a, 1b gemessenen Beleuchtungsstärken.

### Bevorzugte Ausführung der Erfindung

Die Figuren 1 a, 1b zeigen schematisch einen Längsschnitt bzw. einen Querschnitt längs der Linie "Ia-Ib eines erfindungsgemäßen länglichen Beleuchtungssystem 1 mit zwei mittels Koppelelement 2 gekoppelten stabförmigen Apertur-Leuchtstofflampen 3 (nur teilweise dargestellt).

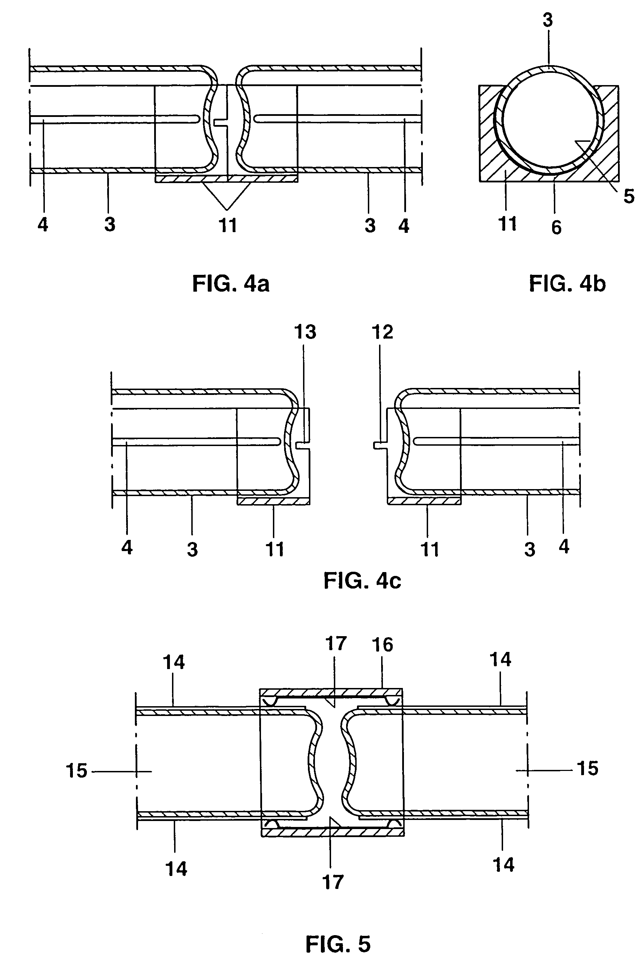

Jede Lampe 3 weist zwei linienartige Elektroden 4 auf, die auf der Innenseite der Wand des Lampengefäßes diametral und parallel zur Längsachse der stabförmigen Lampe 3 angeordnet sind (im Längsschnitt ist nur eine der beiden Elektroden zu sehen; im Querschnitt sind die Elektroden nicht erkennbar). Die Elektroden 4 sind mit einer Glaslotschicht abgedeckt (nicht dargestellt), die als dielektrische Barriere bezüglich des Innern des Lampengefäßes, d.h. im Lampenbetrieb bezüglich der Entladung, wirkt. Es handelt sich hier also um eine beidseitig dielektrisch behinderte Entladung. Die Innenseite der Wand des Lampengefäßes weist eine Leuchtstoffschicht 5 auf, wobei eine längliche, parallel zur Lampenlängsachse orientierte Apertur ausgespart ist. Im Innern des Lampengefäßes befindet sich ein Xenon-Neon-Gemisch mit einem Xenonpartialdruck von ca. 15 kPa. Im übrigen entspricht die Lampe 3 im wesentlichen der in der US-A 2002/0163306 offenbarten Lampe. Für weitere Details, die hier allerdings allenfalls eine nachrangige Rolle spielen, wird deshalb auf den Offenbarungsgehalt dieser Schrift verwiesen, insbesondere auf die dortigen Figuren 3 und 5 mit zugehöriger Figurenbeschreibung.

Das Koppelelement 2 ist aus einem undurchsichtigen Kunststoffmaterial als Halbschale ausgebildet, in der jeweils ein Ende der beiden Lampen 3 angeordnet ist. Dabei schließt die Halbschale 2 mit der Ausdehnung der Leuchtstoffschicht 5 ab, d.h. sie endet am Rand der Apertur. Der gegenseitige Abstand a der Lampenenden im Koppelelement 2 beträgt ca. 1 mm. Die konkave Innenseite des Koppelelements 2 ist mit einer Aluminiumfolie 6 verspiegelt.

Die Fig. 2a, 2b zeigen schematisch eine Variante des obigen Ausführungsbeispiels. Dabei sind gleiche Merkmale wie in Fig. 1 a, 1b mit gleichen Bezugszeichen versehen. Hier ist das Koppelelement aus einem transparenten Kunststoffmaterial als Hohlzylinder 7 ausgebildet. Die Ausdehnung der Spiegelschicht 6 auf der Innenseite des Hohlzylinders 7 ist hier ebenfalls an die Ausdehnung der Leuchtstoffschicht 5 angepasst, d.h. auch hier ist die Apertur selbstverständlich unverspiegelt.

In der in den Fig. 3a, 3b schematisch dargestellten Variante ist das Koppelelement als quaderförmiger Lampensockel 8 weitergebildet der eine halbschalenförmige Ausnehmung zur Aufnahme je eines Endes der beiden Lampen 3 aufweist. Die ebene Grundfläche 9 dieser Ausführungsform eignet sich zur Montage auf einem Lampenträger. Außerdem ist mittig auf der Innenseite des Koppelelements 8 noch ein nasenförmiger Anschlag 10 vorgesehen, der die Einstellung des gegenseitigen Abstands a der Enden der beiden Lampen 3 erleichtert.

Die in den Fig. 4a bis 4c schematisch dargestellte Variante unterscheidet sich von der in den Fig. 3a, 3b dargestellten Ausführungsform lediglich dadurch, dass das Koppelelement 11 zweiteilig ausgeführt ist Die beiden Teile sind mittels einer Rastnase 12 und einer zugehörigen Öffnung 13 fest miteinander verbindbar.

Fig. 5 zeigt schematisch eine Variante, bei der die linienförmigen Elektroden 14 auf der Außenseite des Gefäßes der Lampen 15 angeordnet sind. Hier dient also die Gefäßwand als Dielektrikum für die dielektrisch behinderte Entladung. Das Koppelelement 14 weist zwei längliche Kontaktfedern 17 auf, die die beiden Außenelektroden 14 der einen Lampe 15 mit den beiden Außenelektroden 14 der anderen Lampe 15 elektrisch leitend verbinden.

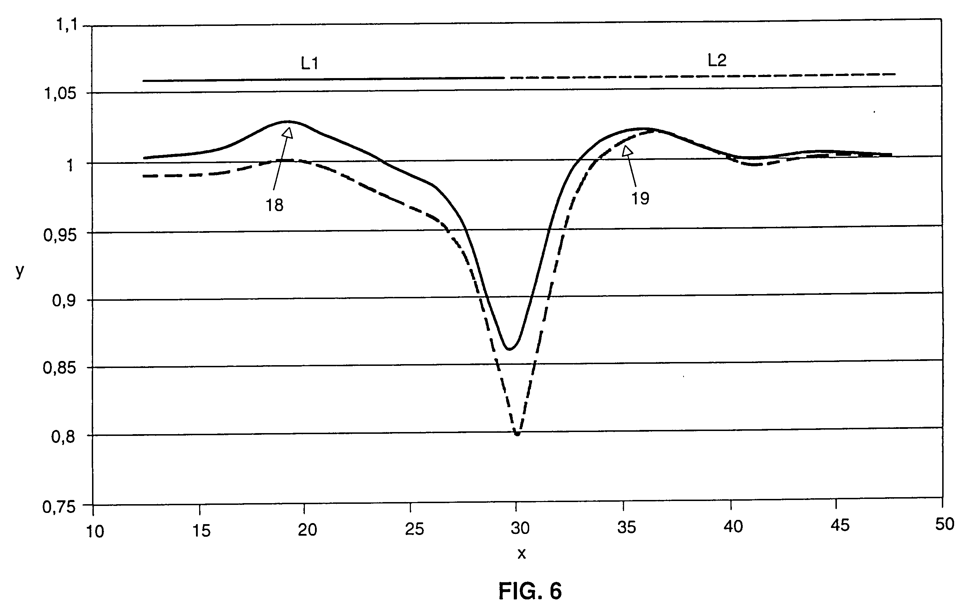

Fig. 6 zeigt den in 8 mm Abstand über der Apertur gemessenen relativen Verlauf der Beleuchtungsstärke (y-Achse) für das Ausführungsbeispiel in Fig. 1a, 1b, wobei L1 und L2 die beiden Lampen symbolisieren. Die Messkurven 18, 19 zeigen die Ergebnisse mit bzw. ohne Spiegelfolie innerhalb des Koppelelements. Ohne Spiegelfolie nimmt die Beleuchtungsstärke im Übergangsbereich zwischen den beiden Lampenenden (der Messort ist auf der x-Achse dargestellt) um ca. 20% ab. Mit Spiegelfolie wird ein um ca. 25% verringerter Abfall der relativen Beleuchtungsstärke erzielt. Außerdem ist zu erkennen, dass das Minimum breiter ist, d.h. die schmale dunkle Zone wird erfindungsgemäß durch eine breitere hellere ausgeglichen.

Die vorstehenden Beispiele zeigen jeweils Systeme mit zwei Lampen, die über ein Koppelelement miteinander verbunden sind. Selbstverständlich umfasst die Erfindung aber auch Systeme mit drei oder mehr Lampen, wobei dann zwei bzw. entsprechend mehr Koppelelemente erforderlich sind, wie bereits eingangs erläutert wurde.

## Patentansprüche

1. Koppelelement (2) für das Kombinieren von zumindest zwei länglichen Lampen mit jeweils zwei Enden, wobei das Koppelelement (2) eine zur Aufnahme eines Endes jeder Lampe vorgesehene durchgängige Aufnahmefläche aufweist, welche Aufnahmefläche einen Reflektor (6) umfasst.

2. Koppelelement nach Anspruch 1, das zur Aufnahme von Lampen mit rohrförmigem Lampengefäß vorgesehen ist, wobei die Aufnahmefläche an die rohrförmige Krümmung der Außenseite des aufzunehmenden Lampengefäßes angepasst ist.

3. Koppelelement nach Anspruch 2, wobei die Aufnahmefläche durch die Innenfläche einer Halbschale (2) realisiert ist.

4. Koppelelement nach Anspruch 2, wobei die Aufnahmefläche durch eine Bohrung im Koppelelement realisiert ist.

5. Koppelelement nach Anspruch 2, wobei die Aufnahmefläche durch die Innenfläche eines Hohlzylinders (7) realisiert ist.

6. Koppelelement nach einem der vorstehenden Ansprüche, wobei der Reflektor durch eine spiegelnde Fläche realisiert ist.

7. Koppelelement nach einem der Ansprüche 1 bis 5, wobei der Reflektor durch eine diffus reflektierende Fläche realisiert ist.

8. Koppelelement nach einem der Ansprüche 1 bis 5, wobei der Reflektor durch eine auf der Aufnahmefläche angeordnete reflektierende Folie (6) realisiert ist.

9. Koppelelement nach einem der vorstehenden Ansprüche, wobei das Koppelelement als Lampensockel weitergebildet ist.

10. Koppelelement nach einem der vorstehenden Ansprüche, wobei das Koppelelement (16) mit elektrischen Kontakten (17) versehen ist.

11. Koppelelement nach Anspruch 9 oder 10, wobei das Koppelelement mit Anschlüssen für eine elektrische Leistungsversorgung versehen ist.

12. Koppelelement nach Anspruch 9 oder 10, wobei das Koppelelement Mittel zur Montage auf einem Lampenträger aufweist.

13. Koppelelement nach einem der vorstehenden Ansprüche, wobei das Koppelelement (11) zweiteilig ist.

14. Beleuchtungssystem (1) mit mindestens zwei länglichen Lampen (3) und mindestens einem Koppelelement (2) mit den Merkmalen eines der Ansprüche 1 bis 13, wobei jeweils ein Ende der mindestens zwei Lampen (3) in dem mindestens einen Koppelelement (2) angeordnet sind.

15. Beleuchtungssystem nach Anspruch 14, wobei die Stirnseiten der mindestens zwei Lampen (3) innerhalb des Koppelelements (2) möglichst nahe zueinander angeordnet sind ohne sich zu berühren, typisch mit ca. a = 1 mm Abstand.

16. Beleuchtungssystem nach Anspruch 14, wobei das Koppelelement (8) einen Anschlag (10) aufweist, der einen minimalen gegenseitigen Abstand der Stirnseiten der beiden Lampen (3) definiert.

17. Beleuchtungssystem nach Anspruch 14, 15 oder 16, wobei die mindestens zwei Lampen (3) Aperturlampen sind.

18. Beleuchtungssystem nach einem der Ansprüche 14 bis 17, wobei die mindestens zwei Lampen (3) dielektrisch behinderte Entladungslampen sind.

19. Beleuchtungssystem nach einem der Ansprüche 14 bis 18, wobei zumindest eine erste Lampe an ihren beiden Enden mit jeweils einem Koppelelement versehen ist, in welchen Koppelelementen wiederum jeweils ein Ende einer zweiten und einer dritten Lampe angeordnet ist und wobei die Elektroden der erste Lampe über die elektrischen Kontakte eines Koppelelements mit den Elektroden der zweiten Lampe verbunden sind.
